# EUROPÄISCHE PATENTANMELDUNG

(11) **EP 2 017 027 A1**
(43) Veröffentlichungstag der Anmeldung: **21.01.2009**
(21) Anmeldenummer: 07020456.5
(22) Anmeldetag: 18.10.2007
(51) Int. Cl.: B23K 9/167, B23K 35/38

(54) **Verfahren zum Lichtbogenfügen**

(30) Priorität: 17.07.2007 DE 102007033291
(71) Anmelder: Linde Aktiengesellschaft, 80807 München (DE)
(72) Erfinder: Ammann, Thomas, 81379 München (DE); Brune, Eberhard, 6386 Wolfenschiessen (CH); Grollimund, Hans, 4153 Reinach (CH)

(57) **Zusammenfassung**

Um ein Verfahren zum Lichtbogenfügen, insbesondere zum Lichtbogenschweißen und/oder zum Lichtbogenlöten, unter Schutzgas mittels der Methode des W[olfram]I[nert]G[as]-Fügens, insbesondere des WIG-Schweißens und/oderdes WIG-Lötens, wobei als Schutzgas mindestens ein
- im Wesentlichen Argon und/oder Helium sowie
- Kohlendioxid in einem Anteilsbereich von etwa 0,2 Volumenprozent (Vol.-%) bis etwa 0,7 Vol.-%
aufweisendes Gasgemisch zugeführt wird, sowie ein entsprechendes Schutzgas so weiterzubilden, dass Schmelzbadbewegungen, Lichtbogenunruhe sowie Verschleißerscheinungen der W[olfram]I[nert]G[as]-Elektrode in zuverlässiger Weise vermieden werden, wird vorgeschlagen, dass das Schutzgas des Weiteren Wasserstoff in einem Anteilsbereich von etwa 1,8 Vol.-% bis etwa 9 Vol.-% aufweist.

## Beschreibung

### Technisches Gebiet

Die vorliegende Erfindung betrifft ein Verfahren zum Lichtbogenfügen gemäß dem Oberbegriff des Anspruchs 1.

Die vorliegende Erfindung betrifft des Weiteren die Verwendung mindestens eines Schutzgases gemäß dem Oberbegriff des Anspruchs 8.

### Stand der Technik

Lichtbogenfügen unter Schutzgas ist eine häufig eingesetzte Fügetechnik, die insbesondere das Lichtbogenschweißen und das Lichtbogenlöten umfasst. Des Weiteren gehört zum Lichtbogenfügen auch das Verbinden von artverschiedenen Werkstoffen, wobei ein Werkstoff aufgeschmolzen wird, während der andere Werkstoff nur erwärmt wird.

Beim Lichtbogenschweißen brennt ein Lichtbogen zwischen einer in einem Brenner angeordneten Elektrode und dem zu bearbeitenden Werkstück. Eine Schweißverbindung entsteht hierbei durch Aufschmelzen des Grundwerkstoffs an der Bearbeitungsstelle im Lichtbogen und anschließendes Wiedererstarren des Werkstoffs.

Hierbei werden zum Lichtbogenschweißen unter Schutzgas, dem sogenannten M[etall]S[chutz]G[as]-Schweißen, verschiedene Schweißverfahren eingesetzt: Neben dem Verfahren mit abschmelzender Elektrode, zu dem das M[etall]A[ktiv]G[as]-Schweißen und das M[etall]I[nert]G[as]-Schweißen gehören, existieren das mit nicht abschmelzender Elektrode arbeitende W[olfram]I[nert]G[as]-Schweißen und das Plasmaschweißen.

Das Schweißverhalten kann durch eine geeignete Schutzgasauswahl beeinflusst werden. Beim W[olfram]I[nert]G[as]-Schweißen oder WIG-Schweißen werden üblicherweise als Schutzgas inerte oder sehr schwach aktive Gase bzw. Gasmischungen eingesetzt. Schutzgase, welche zum WIG-Schweißen geeignet sind, sind beispielsweise in der Druckschrift EP 0 544 187 A1, in der Druckschrift EP 1 607 168 A1 oder in der Druckschrift EP 0 639 427 A1 beschrieben, wobei die EP 0 639 427 A1 ein Verfahren zum Schutzgasschweißen (WIG oder MIG/MAG) beinhaltet, bei welchem eine Schutzgasmischung aus 0,005 bis 0,1 Vol.-% Kohlendioxid und/oder Sauerstoff, 0,5 bis 4 Vol.-% Wasserstoff und 10 bis 55 Vol.-% Helium und vorzugsweise mindestens 40 Vol.-% Argon verwendet wird.

In den Druckschriften DE 102 54 743 A1 und EP 1 295 669 A1 aus dem Stand der Technik ist jeweils ein Schutzgas zum WIG-Schweißen aus Argon, Helium und Wasserstoff beschrieben, das ein vorteilhaftes Anfließverhalten bewirkt. Das in der Druckschrift DE 102 54 743 A1 aus dem Stand der Technik offenbarte Schutzgas weist
- 9 Vol.-% bis 30 Vol.-% Helium,
- 0,15 Vol.-% bis 5 Vol.-% Wasserstoff und
- im übrigen Volumenanteil Argon
auf; das in der Druckschrift EP 1 295 669 A1 aus dem Stand der Technik offenbarte Schutzgas weist
- 5 Vol.-% bis 60 Vol.-% Helium,
- 0,1 Vol.-% bis 10 Vol.-% Wasserstoff und
- im übrigen Volumenanteil Argon
auf.

Beim WIG-Schweißen in der industriellen Fertigung kommt es häufig vor, dass ungleichartige Werkstoffe miteinander zu verbinden sind. Ein Beispiel hierfür sind Rohr-Flansch-Verbindungen, bei denen das Rohr aus normalem, nicht-rostendem Stahl und der Flansch aus einem sogenannten Automatenstahl bestehen.

Automatenstähle sind Stähle, die für das Zerspanen, beispielsweise zum Drehen, zum Fräsen oder zum Bohren, auf automatisierten Werkzeugmaschinen optimiert sind. Diese verbesserte Zerspanbarkeit wird durch eine Legierung mit beispielsweise etwa 0,25 Vol.-% Schwefel erreicht. Durch den Zusatz von Schwefel, gegebenenfalls neben weiteren Legierungselementen, bilden sich spröde Einschlüsse, an denen die Späne brechen können. Dies verbessert zwar die Zerspanbarkeit, die Schweißeignung leidet jedoch erheblich.

So treten aufgrund des sogenannten Marangoni-Effekts bzw. der sogenannten Marangoni-Konvektion, einer durch den Schwefelgehalt hervorgerufenen partiellen Strömungsumkehr im Schmelzbad, beim Fügen von Automatenstahl mit normalem Stahl Verschlechterungen des Fließverhaltens, insbesondere sehr unvorteilhafte Schmelzbadbewegungen, und eine starke Lichtbogenunruhe auf. Der Marangoni-Effekt kann jedoch auch bei der Verbindung von Werkstoffen auftreten, die eigentlich gleich sind, jedoch aufgrund unterschiedlicher Chargenzusammensetzung ein abweichendes Schweißverhalten zeigen.

Aus dem Artikel "Marangoni Convection in Weld Pool in CO2-Ar-Shielded Gas Thermal Arc Welding" von Shanping Lu, Hidetoshi Fujii und Kiyoshi Nogi, veröffentlicht in "Metallurgical and Materials Transactions A", Band 35A, September 2004, Seiten 2861 bis 2867, ist bekannt, dass die vorstehend dargestellten Probleme der Schmelzbadbewegung und der Lichtbogenunruhe durch Zumischung von etwa 0,5 Prozent Kohlendioxid (CO₂) zum Schutzgas Argon (Ar) gelöst werden können. Dieser Artikel beschreibt ein Verfahren sowie ein Schutzgas der eingangs genannten Art.

Die Schmelzbadbewegung und die Schmelzbadströmung werden durch die CO₂-Zumischung derart beeinflusst, dass sich trotz unterschiedlicher Werkstoffzusammensetzung ein einheitliches Fließverhalten ergibt. Laut Literatur und laut einiger eigener Versuche der Anmelderin liegt das Optimum für den CO₂-Gehalt des Schutzgases bei etwa 0,5 Prozent.

Allerdings ist eine solche Kohlendioxidmenge bereits sehr schädlich für die W[olfram]I[nert]G[as]-Elektrode, die dann schon nach kürzester Zeit deutliche Verschleißerscheinungen zeigt.

Aus der Druckschrift DE 24 51 591 A1 ist bekannt, dass Oxidbildungen und damit einhergehende Verschleißerscheinungen der Elektrode durch Zugabe von 0,1 Vol.-% bis 1 Vol.-% Wasserstoff zu einem Schutzgas aus Argon und/oder aus Helium vermieden werden können. Des Weiteren offenbart die Druckschrift EP 0 826 456 A1 eine Schutzgasmischung aus Argon, die zur Verringerung der Korrosionsanfälligkeit der Schweißnaht 2 Vol.-% bis 3,7 Vol.-% Stickstoff und zur Vermeidung eines schnellen Verschleißes der Elektrode 0,5 Vol.-% bis 1,2 Vol.-% Wasserstoff aufweist. Aus der Druckschrift DE 24 51 591 A1 ist jedoch ferner bekannt, dass der Wasserstoffgehalt des Schutzgases nicht hoch sein darf, damit die Schweißqualität nicht beeinträchtigt wird.

### Darstellung der vorliegenden Erfindung: Aufgabe, Lösung, Vorteile (unter Angabe des besten Wegs zur Ausführung der vorliegenden Erfindung)

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art sowie die Verwendung mindestens eines Schutzgases der eingangs genannten Art so weiterzubilden, dass Schmelzbadbewegungen, Lichtbogenunruhe sowie Verschleißerscheinungen der W[olfram]I[nert]G[as]-Elektrode in zuverlässiger Weise vermieden werden.

Diese Aufgabe wird durch ein Verfahren mit den im Anspruch 1 angegebenen Merkmalen sowie durch die Verwendung mindestens eines Schutzgases mit den im Anspruch 8 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung auf einem aktiven Gasgemisch, insbesondere auf einem aktiven Schutzgasgemisch, zum W[olfram]I[nert]G[as]-Schweißen; das Schutzgas weist also Wasserstoff (H₂) auf, insbesondere wird dem Schutzgas zusätzlich Wasserstoff zugemischt. Der Wasserstoff sorgt zum einen für ein günstiges Einbrandverhalten; zum anderen schützt der Wasserstoff durch seine reduzierende Wirkung die Elektrode vor dem Einfluss des Kohlendioxids.

Auf für den Fachmann überraschende Weise wurde festgestellt, dass das Schutzgas aufgrund eines relativ hohen Kohlendioxidgehalts auch einen vergleichsweise hohen Wasserstoffgehalt aufweisen kann, wobei die Schweißqualität nicht negativ beeinflusst, sondern sogar verbessert wird.

So wurde festgestellt, dass bei
- einem Kohlendioxidgehalt in einem Anteilsbereich von etwa 0,2 Volumenprozent (Vol.-%) bis etwa 0,7 Vol.-% und
- einem Wasserstoffgehalt in einem Anteilsbereich von etwa 1,8 Vol.-% bis etwa 9 Vol.-%
nicht nur der Verschleiß der Elektrode erheblich reduziert wird, die Elektrode also länger lebt, sondern überraschenderweise auch beim Fügen weniger Poren auftreten, das Fließverhalten verbessert wird und eine höhere Fügegeschwindigkeit erreicht wird.

Überraschenderweise hat sich somit herausgestellt, dass die im vorstehenden Kapitel "Stand der Technik" genannten Artikel "Marangoni Convection in Weld Pool in CO₂-Ar-Shielded Gas Thermal Arc Welding" beschriebene Wirksamkeit des Kohlendioxids hinsichtlich der Stabilisierung des Lichtbogens und hinsichtlich der Verbesserung des Fließverhaltens, insbesondere hinsichtlich der Vermeidung der Schmelzbadbewegung, durch einen Wasserstoffgehalt im Schutzgas von etwa 1,8 Vol.-% bis etwa 9 Vol.-% nicht vermindert, sondern sogar unterstützt wird.

Besonders überraschend ist ferner die Beobachtung, dass beim erfindungsgemäßen Verfahren, bei dem das Schutzgas eine Kombination aus etwa 0,2 Vol.-% bis etwa 0,7 Vol.-% Kohlendioxid mit etwa 1,8 Vol.-% bis etwa 9 Vol.-% Wasserstoff aufweist, die Lichtbogenstabilität erheblich verbessert wird, der Lichtbogen also sehr ruhig ist.

Weitere Vorteile der vorliegenden Erfindung sind
- eine Verringerung der Oxidation der Nahtoberfläche und
- eine besonders gleichmäßige Nahtschuppung.

Das Schutzgas weist vorteilhafterweise Wasserstoff in einem Bereich von etwa 4,5 Vol.-% bis etwa 8 Vol.-%, insbesondere mit einem Anteil von etwa 5 Vol.-% bis etwa 7 Vol.-%, beispielsweise von etwa 6 Vol.-%, auf.

Der Gehalt an Argon kann etwa 30 Vol.-% bis etwa 95 Vol.-%, insbesondere etwa 40 Vol.-% bis etwa 50 Vol.-%, betragen.

Gemäß einer weiteren vorteilhaften Ausgestaltung der vorliegenden Erfindung kann dem Schutzgas des Weiteren Helium beigemischt werden bzw. beigemischt sein, um weitere Vorteile hinsichtlich Einbrand und/oder hinsichtlich Nahtgeometrie zu erzielen. Beispielsweise kann das Schutzgas Helium in einem Bereich von etwa 10 Vol.-% bis etwa 70 Vol.-%, insbesondere mit einem Anteil von etwa 20 Vol.-% bis etwa 50 Vol.-%, beispielsweise von etwa 25 Vol.-% bis etwa 30 Vol.-%, aufweisen.

Eine besonders bevorzugte Ausführungsform des Schutzgases besteht
- aus etwa 0,2 Vol.-% bis etwa 0,7 Vol.-%, insbesondere aus etwa 0,5 Vol.-% bis etwa 0,6 Vol.-%, Kohlendioxid,
- aus etwa 4,5 Vol.-% bis etwa 8 Vol.-%, insbesondere aus etwa 5 Vol.-% bis etwa 7 Vol.-%, beispielsweise aus etwa 6 Vol.-%, Wasserstoff und
- im verbleibenden Anteilsbereich aus Argon und/oder aus Helium.

Das Schutzgas kann an Ort und Stelle des Einsatzes aus zwei oder mehr Ausgangsgasen oder Ausgangsgasmischungen gemischt werden. Es ist aber auch möglich, dass das Schutzgas als Fertiggemisch bereitgestellt und/oder geliefert wird.

Die vorliegende Erfindung bietet den Vorteil, dass ungleichartige Verbindungen ohne Einschränkungen hinsichtlich Einbrand und/oder hinsichtlich Lichtbogenruhe problemlos gefügt, insbesondere verschweißt, werden können. Der hierbei an und für sich zu erwartende starke Elektrodenverschleiß bleibt durch die Wasserstoffzumischung weitgehend aus.

In besonders vorteilhafter Weise wird das Schutzgas gemäß der vorstehend dargelegten Art beim Lichtbogenfügen, insbesondere beim Lichtbogenschweißen und/oder beim Lichtbogenlöten, mindestens eines zu fügenden Gegenstands
- aus unterschiedlichen Materialien, insbesondere aus schwefelfreiem Stahl und aus schwefelhaltigem Stahl, zum Beispiel einer Rohr-Flansch-Verbindung, und/oder
- aus Material unterschiedlicher Chargen,
unter Einsatz eines Verfahrens gemäß der vorstehend dargelegten Art verwendet.

Mittels des Verfahrens gemäß der vorstehend dargelegten Art kann also mindestens eine artverschiedene Werkstoffverbindung mit überraschend guter Qualität bereitgestellt werden.

Insbesondere kann mindestens ein Gegenstand aus mindestens zwei unterschiedlichen Werkstoffen gefügt werden.

Des Weiteren kann mindestens ein Gegenstand aus mindestens zwei unterschiedlichen Werkstoffarten, beispielsweise
- aus unlegiertem und niedriglegiertem Stahl oder
- aus unlegiertem und hochlegiertem Stahl oder
- aus niedriglegiertem und hochlegiertem Stahl oder
- aus Stahl (un-, niedrig- oder hochlegiert) und einem Nickelbasiswerkstoff,
gefügt werden. Insbesondere können so beispielsweise auch Duplexstähle und Nickelbasiswerkstoffen oder auch rostende mit nicht rostenden Stählen oder auch verschieden legierte Baustähle miteinander verbunden werden.

Der zu fügende Gegenstand kann aber auch aus mindestens zwei unterschiedlichen Werkstoffsorten, insbesondere aus unterschiedlichen hochlegierten Stählen bestehen. So kann beispielsweise hochlegierter, schwefelhaltiger Stahl mit hochlegiertem, schwefelfreien Stahl oder verbunden werden. Beispielsweise kann auch hochlegierter, molybdänhaltiger Stahl mit hochlegiertem, molybdänfreiem Stahl verbunden werden oder ein Duplexstahl mit einem Chrom-Nickel-Stahl. In der Praxis kann die Verbindung beispielsweise eine Rohr-Flansch-Verbindung sein. Bei einer Verbindung aus unterschiedlichen Werkstoffsorten werden bevorzugt verschiedene hochlegierte Stähle verbunden, jedoch können andere Stahlsorten oder insbesondere auch unterschiedliche Nickelbasiswerkstoffe miteinander verbunden werden.

Ferner ist die vorliegende Erfindung mit besonderem Vorteil beim Fügen mindestens eines Gegenstands aus mindestens einem Material unterschiedlicher Chargen einsetzbar. Chargenunterschiede entstehen aufgrund der Toleranzen, welche Normen für gleiche Werkstoffe zulassen und welche bei der Herstellung ausgenützt werden.

Die vorliegende Erfindung betrifft insbesondere sowohl handgeführtes oder manuelles als auch automatisiertes oder mechanisiertes W[olfram]I[nert]G[as]-Schweißen von ungleichen oder ungleichartigen Verbindungen oder Werkstoffen aller Art, zum Beispiel auch von nicht-rostendem Stahl an nicht-rostendem Automatenstahl, oder von gleichen oder gleichartigen Verbindungen oder Werkstoffen verschiedener Chargenzugehörigkeit.

## Patentansprüche

1. Verfahren zum Lichtbogenfügen, insbesondere zum Lichtbogenschweißen und/oder zum Lichtbogenlöten, unter Schutzgas mittels der Methode des W[olfram]I[nert]G[as]-Fügens, insbesondere des WIG-Schweißens und/oder des WIG-Lötens, wobei als Schutzgas mindestens ein
- im Wesentlichen Argon und/oder Helium sowie
- Kohlendioxid in einem Anteilsbereich von etwa 0,2 Volumenprozent (Vol.-%) bis etwa 0,7 Vol.-%
aufweisendes Gasgemisch zugeführt wird,
**dadurch gekennzeichnet,**
**dass** das Schutzgas des Weiteren Wasserstoff in einem Anteilsbereich von etwa 1,8 Vol.-% bis etwa 9 Vol.-% aufweist.

2. Verfahren gemäß Anspruch 1, **dadurch gekennzeichnet, dass** das Schutzgas Wasserstoff in einem Anteilsbereich von etwa 4,5 Vol.-% bis etwa 8 Vol.-%, insbesondere in einem Anteilsbereich von etwa 5 Vol.-% bis etwa 7 Vol.-%, beispielsweise mit einem Anteil von etwa 6 Vol.-%, aufweist.

3. Verfahren gemäß Anspruch 1 oder 2, **dadurch gekennzeichnet, dass** das Schutzgas
- Argon in einem Anteilsbereich von etwa 30 Vol.-% bis etwa 95 Vol.-%, insbesondere in einem Anteilsbereich von etwa 40 Vol.-% bis etwa 50 Vol.-%, und/oder
- Helium in einem Anteilsbereich von etwa 10 Vol.-% bis etwa 70 Vol.-%, insbesondere in einem Anteilsbereich von etwa 20 Vol.-% bis etwa 50 Vol.-%, beispielsweise in einem Anteilsbereich von etwa 25 Vol.-% bis etwa 30 Vol.-%,
aufweist.

4. Verfahren gemäß mindestens einem der Ansprüche 1 bis 3, **dadurch gekennzeichnet, dass** das Schutzgas
- aus Kohlendioxid in einem Anteilsbereich von etwa 0,2 Vol.-% bis etwa 0,7 Vol.-%, insbesondere in einem Anteilsbereich von etwa 0,5 Vol.-% bis etwa 0,6 Vol.-%, beispielsweise mit einem Anteil von etwa 0,5 Vol.-%,
- aus Wasserstoff in einem Anteilsbereich von etwa 4,5 Vol.-% bis etwa 8 Vol.-%, insbesondere in einem Anteilsbereich von etwa 5 Vol.-% bis etwa 7 Vol.-%, beispielsweise mit einem Anteil von etwa 6 Vol.-%, und
- im verbleibenden Anteilsbereich aus Argon und/oder aus Helium
besteht.

5. Verfahren gemäß mindestens einem der Ansprüche 1 bis 4, **dadurch gekennzeichnet, dass** das Schutzgas an der Bearbeitungsstelle oder am Einsatzort aus zwei oder mehr Ausgangsgasen oder Ausgangsgasmischungen gemischt wird.

6. Verfahren gemäß mindestens einem der Ansprüche 1 bis 5, **dadurch gekennzeichnet, dass** das Schutzgas als Fertiggemisch geliefert und/oder bereitgestellt wird.

7. Verfahren gemäß mindestens einem der Ansprüche 1 bis 6, **dadurch gekennzeichnet, dass** mindestens eine artverschiedene Werkstoffverbindung bereitgestellt, insbesondere dass mindestens ein Gegenstand
- aus mindestens zwei unterschiedlichen Werkstoffen und/oder
- aus mindestens zwei unterschiedlichen Werkstoffarten und/oder
- aus mindestens zwei unterschiedlichen Werkstoffsorten und/oder
- aus mindestens einem Material unterschiedlicher Chargen
gefügt wird.

8. Verwendung mindestens eines Schutzgases zum Lichtbogenfügen, insbesondere zum Lichtbogenschweißen und/oder zum Lichtbogenlöten, mittels der Methode des W[olfram]I[nert]G[as]-Fügens, insbesondere des WIG-Schweißens und/oder des WIG-Lötens, wobei das Schutzgas
- im Wesentlichen Argon und/oder Helium,
- Kohlendioxid in einem Anteilsbereich von etwa 0,2 Volumenprozent (Vol.-%) bis etwa 0,7 Vol.-% sowie
- Wasserstoff in einem Anteilsbereich von etwa 1,8 Vol.-% bis etwa 9 Vol.-% aufweist.

9. Verwendung gemäß Anspruch 8, **dadurch gekennzeichnet, dass** das Schutzgas Wasserstoff in einem Anteilsbereich von etwa 4,5 Vol.-% bis etwa 8 Vol.-%, insbesondere in einem Anteilsbereich von etwa 5 Vol.-% bis etwa 7 Vol.-%, beispielsweise mit einem Anteil von etwa 6 Vol.-%, aufweist.

10. Verwendung gemäß Anspruch 8 oder 9, **dadurch gekennzeichnet, dass** das Schutzgas
- Argon in einem Anteilsbereich von etwa 30 Vol.-% bis etwa 95 Vol.-%, insbesondere in einem Anteilsbereich von etwa 40 Vol.-% bis etwa 50 Vol.-%, und/oder
- Helium in einem Anteilsbereich von etwa 10 Vol.-% bis etwa 70 Vol.-%, insbesondere in einem Anteilsbereich von etwa 20 Vol.-% bis etwa 50 Vol.-%, beispielsweise in einem Anteilsbereich von etwa 25 Vol.-% bis etwa 30 Vol.-%,
aufweist.
